# EUROPÄISCHE PATENTSCHRIFT

(11) **EP 1 565 674 B1**
(45) Veröffentlichungstag und Bekanntmachung des Hinweises auf die Patenterteilung: **08.04.2009**
(21) Anmeldenummer: 03767614.5
(22) Anmeldetag: 22.11.2003
(51) Int. Cl.: F16H 61/02, F16H 63/44

(54) **VERFAHREN ZUR REDUZIERUNG DER SERVOUNTERSTÜTZUNG AN EINER SCHALTEINHEIT FÜR EIN FAHRZEUGGETRIEBE**
METHOD FOR REDUCING THE POWER ASSISTANCE FOR A GEARSHIFTING UNIT OF A VEHICLE TRANSMISSION
PROCEDE DE REDUCTION DE L'ASSISTANCE D'UNE UNITE DE PASSAGE DE VITESSES D'UNE TRANSMISISON DE VEHICULE

(30) Priorität: 28.11.2002 DE 10255395
(43) Veröffentlichungstag der Anmeldung: 24.08.2005
(73) Patentinhaber: ZF Friedrichshafen AG, 88038 Friedrichshafen (DE)
(72) Erfinder: FISCHER, Dieter, 88149 Nonnenhorn (DE); SPÄTH, Klaus, 88276 Berg (DE)
(86) Internationale Anmeldenummer: PCT/EP2003/013139
(87) Internationale Veröffentlichungsnummer: WO 2004/048817

(56) Entgegenhaltungen:
- EP-A- 0 926 400
- EP-A- 1 092 894
- DE-A- 10 029 497
- DE-A- 10 217 482
- US-A- 5 150 296
- US-A- 6 109 126

## Beschreibung

Die Erfindung betrifft ein Verfahren zum Betreiben einer Schalteinheit nach dem Oberbegriff des Anspruchs 1.

Getriebe von größeren Nutzfahrzeugen sind in einen Hauptgetriebeteil, ein Splitgruppengetriebe und ein Bereichsgruppengetriebe aufgeteilt. Moderne Getriebe vor allem in Nutzfahrzeugen weisen dabei eine durch eine Pneumatik unterstützte Schalteinrichtung auf, die pneumatische Schaltungen im Splitgruppengetriebe und im Bereichsgruppengetriebe durchführt, während die Schaltungen im Hauptgetriebeteil manuell vom Fahrzeugführer durchgeführt werden und dabei in der ausübenden Kraft durch die Pneumatik unterstützt werden können.

Aus der DE 198 39 854 A1 ist eine Schaltvorrichtung bekannt geworden, bei der eine Servounterstützungseinrichtung die Schaltkraft des Fahrers unterstützt. Dabei soll die Zufuhr der unterstützenden Druckluft reduziert werden, beispielsweise nur dann zugelassen werden, wenn die Fahrzeugkupplung betätigt wird. Dafür sind zusätzliche Ventile erforderlich, die eine Reduzierung ermöglichen. Der Offenbarungsgehalt der DE 198 39 854 A1 soll vollinhaltlich auch Gegenstand dieser Beschreibung sein.
Der Nächtliegende bekanntgewordene Stand der Technik ist der DE 10029497 zu entnehmehenen.
Aus der DE 100 29 497 A1 ist eine elektro-pneumatische Schalteinheit für ein vielgängiges Fahrzeuggetriebe bekannt geworden, bei der mit einer Vielzahl von gesteuerten Ventilen das aus mehreren Baugruppen bestehende Getriebe geschaltet wird und diese gleichzeitig zur Vermeidung von Fehlfunktionen elektronisch überwacht wird. Dazu werden die Ventile von einem zentralen Fahrzeugführungsrechner angesteuert. Der Offenbarungsgehalt der DE 100 29 497 A1 soll vollinhaltlich auch Gegenstand dieser Beschreibung sein. Eine Beeinflussung der unterstützenden Kraft findet nicht statt.

Schließlich ist aus der nicht vorveröffentlichten DE 102 17 482 eine elektro-pneumatische Schalteinheit bekannt, bei der ein Wechselventil vorgesehen ist für ein Fahrzeuggetriebe, das ein manuell vom Fahrzeugführer an einem Schalthebel geschaltetes Hauptgetriebe und ein über Ventile elektro-pneumatisch geschaltetes Splitgruppengetriebe umfasst. Die Schaltungen des Splitgruppengetriebes sind manuell vom Fahrzeugführer durch Schalter an dem Schalthebel vorwählbar. Ein Sensor oder Schalter erkennt eine manuelle Betätigung der Fahrzeugkupplung durch den Fahrzeugführer und gibt dieses Signal an eine elektronischen Steuereinrichtung weiter, die dann die Ventile öffnet. Es ist ein Wechselventil vorgesehen, das mit je einer Eingangsöffnung mit einer Ausgangsleitung der Ventile verbunden ist. Die Ventile öffnen jedes Mal bei Vorliegen eines Kupplungsbetätigungssignal und zwar öffnet immer dasjenige der beiden Ventile, das bei der letzten Betätigung der Schalter für das Splitgruppengetriebe am Schalthebel vorgewählt wurde. Eine Ausgangsöffnung des Wechselventils ist über eine Pneumatikleitung mit einer pneumatischen Servounterstützungseinrichtung verbunden, die den Fahrzeugführer bei der manuellen Schaltung im Hauptgetriebe unterstützt. Das Wechselventil lässt nur die Luftzufuhr von einem der beiden Ventile des Splitgruppengetriebes zu der Pneumatikleitung und damit zur Servounterstützungseinrichtung zu, während die andere Anschlussleitung durch das Wechselventil abgesperrt wird. Dadurch wird verhindert, dass der angeschlossene Schaltzylinder für das Splitgruppengetriebe eine Luftzufuhr für seine beiden Schaltrichtungen erhält. Nur die Anschlussleitung und damit nur der Teil des Schaltzylinders soll Luft bekommen, der auch vorgewählt wurde, wobei nicht wichtig ist, ob die Vorwahl aktuell neu vom Fahrzeugführer vorgenommen wurde, oder bei der letzten entsprechenden Betätigung der Schalter am Schalthebel erfolgte. Für die Pneumatikleitung und damit für die Servounterstützungseinrichtung ist es gleichbedeutend welcher der beiden Seiten des Schaltzylinders Luft bekommt. Die Servounterstützungseinrichtung soll immer dann Luft bekommen, wenn gekuppelt wird. Findet beim Schaltvorgang im Hauptgetriebe keine Schaltung im Splitgruppengetriebe statt, so wird bei der Betätigung der Kupplung das gleiche Ventil wieder angesteuert, dass bereits bei der letzten Schaltung des Splitgruppengetriebes angesteuert und geschaltet wurde. Dadurch lässt dieses Ventil Luft an das Wechselventil und damit an die Servounterstützungseinrichtung durch, ohne den Schaltzylinder des Splitgruppengetriebes selbst in seiner Position zu verändern.

Bei Schaltgetrieben mit Hauptgetriebe und Bereichsgruppengetriebe ist es möglich, während der ablaufenden Umschaltung im Bereichsgruppengetriebe den Gang im Hauptgetriebeteil anzuwählen und bereits gegen einen das Hauptgetriebe verriegelnden Sperrbolzen eine mehr oder weniger große Handschaltkraft aufzubringen. Ist das Schaltgetriebe mit einer Servounterstützungseinrichtung ausgerüstet, so wird diese, bedingt durch die bereits aufgebrachte Handschaltkraft, ausgelöst, d.h. in der Servounterstützungseinrichtung baut sich schon ein ganz bestimmter Druck auf. Ist nun die Umschaltung im Bereichsgruppengetriebe beendet, so gibt der Sperrbolzen die Schaltung im Hauptgetriebe wieder frei. Die bereits mit Druck beaufschlagte Servounterstützungseinrichtung wirkt nun wie eine vorgespannte Feder und beschleunigt die Schaltschiene und Schaltmuffe auf eine hohe Geschwindigkeit, welche dazu führt, dass beim Auftreffen der Schiebemuffe auf die Synchronisierung die Synchronisierung nicht mehr sperrt, sondern unter Erzeugung lauter Geräusche ratscht. Diese Schaltungen unter Erzeugung von Ratschgeräuschen beeinträchtigen die Lebensdauer der Synchronisierungen sowie aller Schaltungsteile erheblich. Dies kann auch schon vor dem Ausfall des Getriebes zu Beanstandungen bezüglich des Geräusches und der Funktion der Schalteinheit führen und somit außerplanmäßige Werkstattaufenthalte begründen.

Der Erfindung liegt die Aufgabe zugrunde, ohne großen Zusatzaufwand die Zufuhr an unterstützendem Medium einer Schalteinrichtung zu bestimmen und Beschädigungen zu vermeiden.

Die Aufgabe wird gelöst durch ein Verfahren zur Reduzierung der Servounterstützung an einer Schalteinheit mit den Merkmalen des Anspruchs 1. Ausgestaltungen sind Gegenstand von Unteransprüchen.

Eine Schalteinheit für ein Fahrzeuggetriebe umfasst ein manuell vom Fahrzeugführer an einem Schalthebel geschaltetes Hauptgetriebeteil, ein über Ventile geschaltetes Bereichsgruppengetriebe, dessen Schaltungen manuell vom Fahrzeugführer an dem Schalthebel vorwählbar sind, und eine Servounterstützungseinrichtung zur Schaltung der Gangstufen im Hauptgetriebeteil. Eine elektronische Steuereinrichtung betätigt die Ventile. Für diese Schalteinheit wird ein Verfahren zur Reduzierung der Servounterstützung vorgeschlagen, bei dem zunächst die Neutralposition in dem manuell geschalteten Hauptgetriebeteil erkannt wird durch geeignete Mittel erkannt wird und mit Erkennen der Neutralposition die Schaltung im Bereichsgruppengetriebeteil beginnt. Verzögert zu diesem Beginn der Schaltung im Bereichsgruppengetriebe erfolgt dann die Zuschaltung der Servounterstützung für den Hauptgetriebeteil. Ein geeignetes Mittel zur Erkennung der Neutralposition kann beispielhaft eine Einrichtung sein, die ansonsten zur Bereichstellung eines Signals für eine Anlasssperrfunktion sein, die den Anlasser nur dann betätigen lässt, wenn das Hauptgetriebeteil in der Neutralposition ist, um ein ungewolltes Vorwärtsspringen des Fahrzeugs beim Motoranlassen zu vermeiden. Eine solche Einrichtung ist in vielen Fahrzeugen vorhanden.
In einer vorteilhaften Ausgestaltung des Verfahrens wird nach dem Beginn der Schaltung auch die Beendigung der Schaltung im Bereichsgruppengetriebe erkannt und festgestellt und nach diesem Erkennen der Beendigung der Schaltung im Bereichsgruppengetriebe erfolgt die Zuschaltung der Servounterstützung für den Hauptgetriebeteil. Das Erkennen der Beendigung der Schaltung kann beispielsweise durch Erfassen des Schaltweges der Schaltschiene, des Interlocks oder der Schaltwelle mit geeigneten Mitteln erfolgen.
In einer weiteren vorteilhaften Ausgestaltung erfolgt nach dem Beginn der Schaltung die verzögerte Zuschaltung der Servounterstützung für den Hauptgetriebeteil erst nach Ablauf einer vorgegebenen Zeit. Bei gleicher Getriebeöltemperatur und gleicher Drehzahl läuft die vollständige Schaltung des Bereichsgruppengetriebes immer in der gleichen Zeit ab, was bedeutet, dass mit dem Erkennen eines Neutralsignals im Hauptgetriebeteil eine verzögerte Zuschaltung der Servounterstützung so erfolgen kann, dass diese genau mit dem Ende der Schaltung im Bereichsgruppengetriebe zusammenfällt. In einer Verfahrensausgestaltung wird die Getriebeöltemperatur erfasst und die Länge dieser vorgegebenen Zeit bis zur verzögerte Zuschaltung der Servounterstützung für den Hauptgetriebeteil wird in Abhängigkeit der erfassten Getriebeöltemperatur bestimmt. Die Länge der vorgegebenen Zeit bis zur verzögerte Zuschaltung der Servounterstützung für den Hauptgetriebeteil wird in einer weiteren Ausgestaltung in Abhängigkeit einer Getriebeabtriebsdrehzahl bestimmt, die ebenfalls erfasst wird.

Bei einer besonders vorteilhaften Verfahrenausführung erfolgt die verzögerte Zuschaltung der Servounterstützung für den Hauptgetriebeteil nach Ablauf einer vorgegebenen Zeit, bis zu deren Ende der Abschluss der Schaltung im Bereichsgruppengetriebeteil üblicherweise erwartet wird. Bei einer getriebeüblichen Öltemperatur von beispielsweise 80 °C dauert ein Schaltvorgang im Bereichsgruppengetriebe eine beispielhafte und versuchsweise erfassbare Zeit. Diese versuchsweise erfasste Zeit wird in der Steuereinrichtung vorprogrammiert und als erwartete Schaltzeit zugrundegelegt.

Wenn die Servounterstützung im Häuptgetriebeteil erst dann zugeschaltet wird, wenn die Schaltung im Bereichgruppengetriebe beendet ist, das ist die Servounterstützungseinrichtung nicht vorgespannt und die Ratschschaltungen und Beschädigungen werden vermieden.

Die Erfindung wird anhand einer Zeichnung näher erläutert.

### Es zeigen:

- Fig. 1: eine schematische Darstellung mit Anordnung des Getriebes;
- Fig. 2: einen typischen Schaltgriff mit Schaltbild;
- Fig. 3: eine Ausgestaltung der Schalteinheit und
- Fig. 4: den zeitlichen Schaltungsablauf.

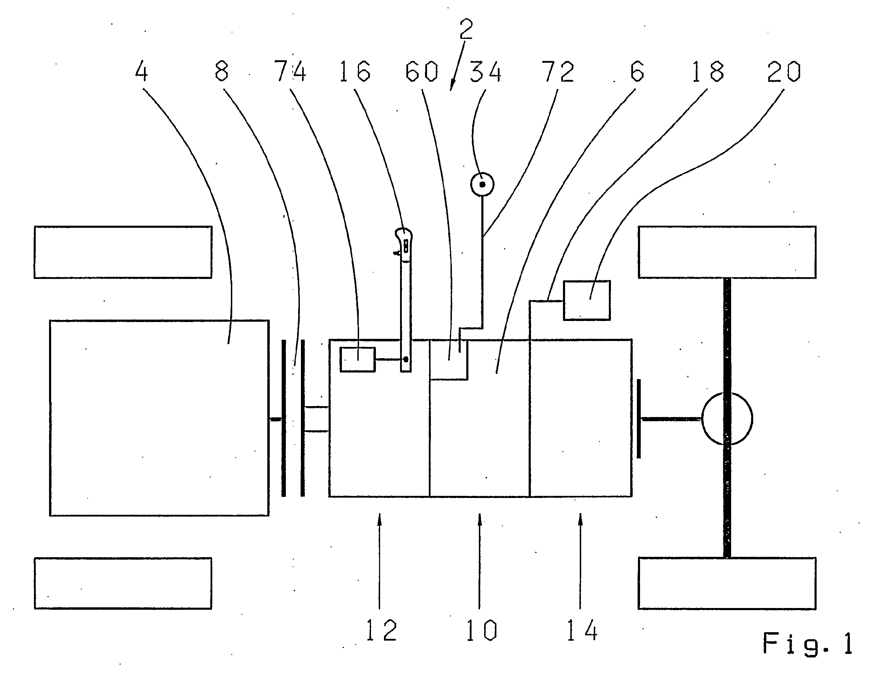

Die Fig. 1 zeigt ein Fahrzeug 2 mit einer Antriebsmaschine 4, einem Getriebe 6 und einer dazwischen angeordnete Kupplung 8. Das Getriebe 6 weist einen Hauptgetriebeteil 10, ein Splitgruppengetriebe 12 und ein Bereichsgruppengetriebe 14 auf. Der Hauptgetriebeteil 10 wird manuell durch den Fahrzeugführer über einen Schalthebel 16 geschaltet. Das Getriebe 6 ist über Verbindungsleitungen 18 mit einer elektronischen Steuereinrichtung 20 verbunden. Über eine Zuleitung 72 ist ein im Gehäuse des Getriebes 6 angeordneter Ventilblock 60 mit einem Luftvorrat 34 verbunden. Eine an oder im Gehäuse monierte Servounterstützungseinrichtung 74 ist mit dem Schalthebel bzw. den von dem Schalthebel betätigten Elementen im Hauptgetriebeteil 10 wirksam verbunden.

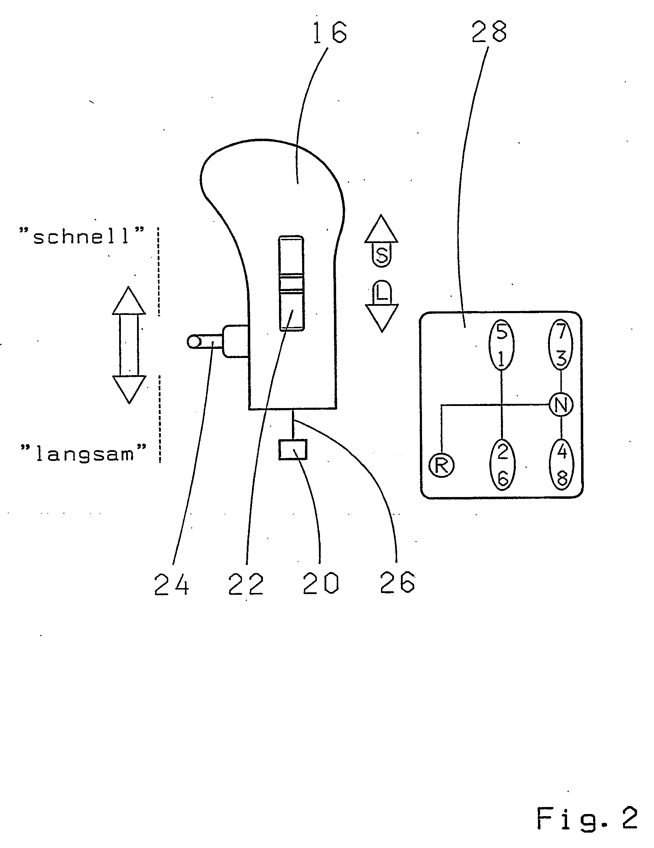

Die Fig. 2 zeigt einen beispielhaften Schalthebel 16 in einer vergrößerten Darstellung für ein Schaltbild 28, das als "Überlagertes-H" bezeichnet wird. Seitlich am Schalthebel 16 ist ein Kippschalter 22 zur Vorwahl der Schaltung des Splitgruppengetriebes 12 angeordnet. An der Vorderseite des Schalthebels 16 ist ein weiterer Kippschalter 24 vorgesehen, über den das Bereichsgruppengetriebe 14 geschaltet wird. Bei beiden Kippschaltern 22, 24 handelt es sich um elektrische Schalter, die über eine elektrische Verbindungsleitung 26 mit der Steuereinrichtung 20 verbunden sind. Bei einer Schaltung mit einem Schaltbild 28 ist in den Vorwärtsgängen jede Endstellung des Schalthebels 16 zwei Übersetzungsstufen zugeordnet, die sich jeweils um den Übersetzungssprung des Bereichsgruppengetriebes 14 unterscheiden. Bei der Kipphebelstellung "langsam" sind die Übersetzungsverhältnisse eins bis vier und der Rückwärtsgang geschaltet, bei Kipphebelstellung "schnell" sind die Gänge fünf bis acht geschaltet. Die Neutralstellung des Hauptgetriebeteils 10 ist in der Gasse zwischen den Übersetzungsverhältnissen drei und vier bzw. sieben und acht angedeutet.

Den Wechsel des Bereichsgruppengetriebes 14 muss der Fahrzeugführer mittels des Kippschalters 24 am Schalthebel 16 vorwählen. Der Wechsel wird ausgeführt, sobald im Hauptgetriebeteil 10 manuell die Neutralstellung eingelegt wird.

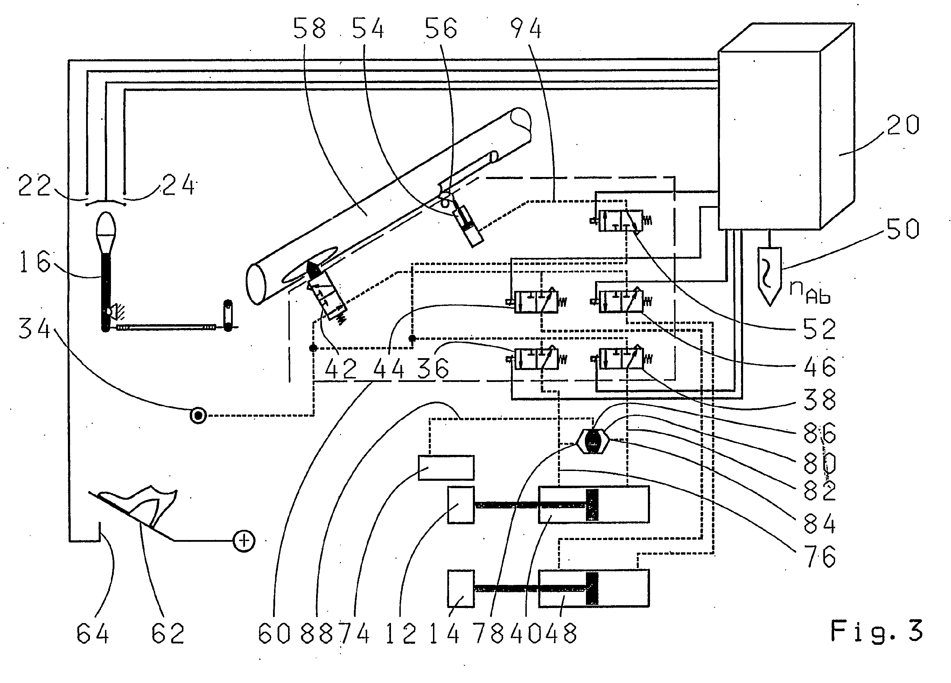

Das Splitgruppengetriebe 12 wird in den Positionen "L" oder "S" mit dem Kippschalter 22 seitlich am Schalthebel 16 vorgewählt und durch die Betätigung der Kupplung 8 geschaltet. Dazu zeigt die Fig. 3 ein Kupplungspedal 62, das einen elektrischen Schalter 64 bestätigt, der mit der Steuereinrichtung 20 verbunden ist. Die Zulassung von Schaltungen im Splitgruppengetriebe 12 wird in dieser Anordnung von der Steuereinrichtung 20 aus bei geschlossenem Schalter 64 bestimmt, wobei an den zwei elektropneumatischen 3/2-WegeVentilen 36 und 38 Luft permanent ansteht. Die Ventile 36 und 38 sind mit der elektronischen Steuereinrichtung 20 verbunden und werden in Abhängigkeit der Schalterstellung des Kippschalters 22 am Schalthebel 16 angesteuert. Bei getretenem Kupplungspedal 62 wird entweder Luft in die linke oder in die rechte Kammer des Schaltzylinders 40 des Splitgruppengetriebes 12 eingelassen, wobei dann die jeweils andere Kammer über die Ventile 36 bzw. 38 entlüftet wird.

Wie bereits ausgeführt muss der Fahrzeugführer den Wechsel des Bereichsgruppengetriebes 14 mittels des Kippschalters 24 am Schalthebel 16 vorwählen. Der Wechsel wird dann ausgeführt, sobald im Hauptgetriebeteil 10 manuell die Neutralstellung eingelegt wird. In der Neutralstellung gibt ein mechanisch an die Schaltbewegung gekoppeltes Hauptabschaltventil 42 die Luft vom Luftvorrat 34 frei zu zwei elektropneumatischen 3/2-Wege-Ventilen 44 und 46. Die Ventile 44 und 46 sind mit der elektronischen Steuereinrichtung 20 verbunden und werden in Abhängigkeit der Schalterstellung des Kippschalters 24 am Schalthebel 16 angesteuert. Bei Erkennen der Neutralstellung durch das Hauptabschaltventil 42 wird über das jeweils angesteuerte Ventil 44 oder 46 entweder Luft in die linke oder in die rechte Kammer des Schaltzylinder 48 des Bereichsgruppengetriebes 14 eingelassen, wobei dann die jeweils andere Kammer über das nicht angesteuerte Ventil 46 bzw. 44 entlüftet wird.

Um Fehlschaltungen zu vermeiden, müssen in der Schalteinrichtung zusätzliche Absicherungen getroffen werden. Dazu ist ein Gassensperrzylinder 54 vorgesehen, der vorzugsweise in der langsamen Übersetzungsstufe des Bereichsgruppengetriebes oberhalb einer bestimmten Abtriebsdrehzahl des Getriebes 6 das Schalten von der rechten Schaltgasse des Schaltbildes 28 in die linke Schaltgasse verhindert, d. h. das Schalten von der dritten oder vierten Übersetzungsstufe in die erste oder zweite Übersetzungsstufe wird verhindert. Dies soll den Fahrzeugführer davor bewahren, irrtümlich in die erste statt in die fünfte Übersetzungsstufe zu schalten, wenn er vergessen hat, mit dem Kippschalter 24 die schnelle Übersetzung in dem Bereichsgruppengetriebe vorzuwählen. In der schnellen Übersetzungsstufe des Bereichsgruppengetriebes kann die selbe Einrichtung dazu verwendet werden, Schaltungen von der achten in die fünfte Übersetzungsstufe zu verhindern. Die Abtriebsdrehzahl des Getriebes 6 wird von einem Sensor 50 erfasst und als Signal an die elektronische Steuereinrichtung 20 weitergegeben. Die Steuereinrichtung 20 gibt bei zu hoher Abtriebsdrehzahl ein Signal an ein elektropneumatisches 3/2-Wege-Ventil 52 ab, das Luft aus dem Luftvorrat 34 über die Leitung 94 zu dem Gassensperrzylinder 54 gelangen lässt, dessen Stößel über einen Umlenkhebel 56 in die Schaltwelle 58 eingreift und diese in Richtung der rechten Schaltgasse des Schaltbildes 28 drückt. Diese Anordnung ist vom Fahrzeugführer mit einem erhöhten Kraftaufwand überdrückbar und erlaubt somit in Extremsituationen das Schalten der Übersetzungsstufen in der linken Schaltgasse des Schaltbildes 28.

Eine Gruppensperre unterdrückt oberhalb einer vorgegebenen Fahrzeuggeschwindigkeit das Schalten des Bereichsgruppengetriebes 14 in die langsame Übersetzung und schützt sowohl die Synchronisierung des Bereichsgruppengetriebes 14 als auch die Synchronisierungen des Hauptgetriebeteils 10. Die Fahrzeuggeschwindigkeit wird über den Sensor 50 entsprechend der Getriebeabtriebsdrehzahl erfasst und als Signal an die Steuereinrichtung 20 weitergegeben. Die Steuereinrichtung 20 steuert in Abhängigkeit dieses Signals die Ventile 44 bzw. 46 an und lässt ein Schalten in die langsame Übersetzung nur bei Vorliegen entsprechender zulässiger Signale zu.

Die Ventile 36, 38, 42, 44, 46, 52 und 54 sind gemeinsam in dem Ventilblock 60 als einem gemeinsamen Gehäuse untergebracht, der unmittelbar an ein Gehäuse, in welchem die Schaltwelle 58 des Getriebes 6 untergebracht ist, montiert wird. Dadurch ergibt sich eine kompakte Einheit des ventilblocks 60, der am Getriebe 6 angeordnet ist (Fig. 1). Durch die geringen Leitungslängen zwischen den einzelnen Ventilen ergeben sich vorteilhaft kurze Reaktionszeiten und Schaltzeiten. Die elektrische Verbindung zwischen Ventilblock 60 und Steuereinrichtung 20 kann über einen zentralen Elektroanschluss am ventilblock 60 erfolgen. Der Ventilblock 60 kann an ein bestehendes Getriebe angeschlossen werden, ohne dass konstruktive Änderungen des Getriebes erforderlich sind.

Vom Ventil 36 führt eine Ausgangsleitung 76 zum Schaltzylinder 40 des Splitgruppengetriebes 12 und zu einer ersten Eingangsöffnung 78 eines Wechselventils 80. Vom Ventil 38 führt eine Ausgangsleitung 82 zum Schaltzylinder 40 des Splitgruppengetriebes 12 und zu einer zweiten Eingangsöffnung 84 des Wechselventils 80. Erhält das Wechselventil 80 Luft von einer der Eingangsöffnungen 78 oder 84, so verschließt es die jeweils andere Eingangsöffnung 84 oder 78. Dadurch gelangt keine Luft in eine nicht gewollte Arbeitskammer des Schaltzylinders 40. Eine Ausgangsöffnung 86 des Wechselventils 80 ist mit einer Pneumatikleitung 88 verbunden, an der die Servounterstützungseinrichtung 74 angeschlossen ist. Wenn die pneumatischen Leitungen und die Durchlässe durch die Ventile ausreichend dimensioniert sind, genügt die die Pneumatikleitung 88 durchströmende Luft aus, um eine ausreichende Kraft in der Servounterstützungseinrichtung 74 zu erzeugen.

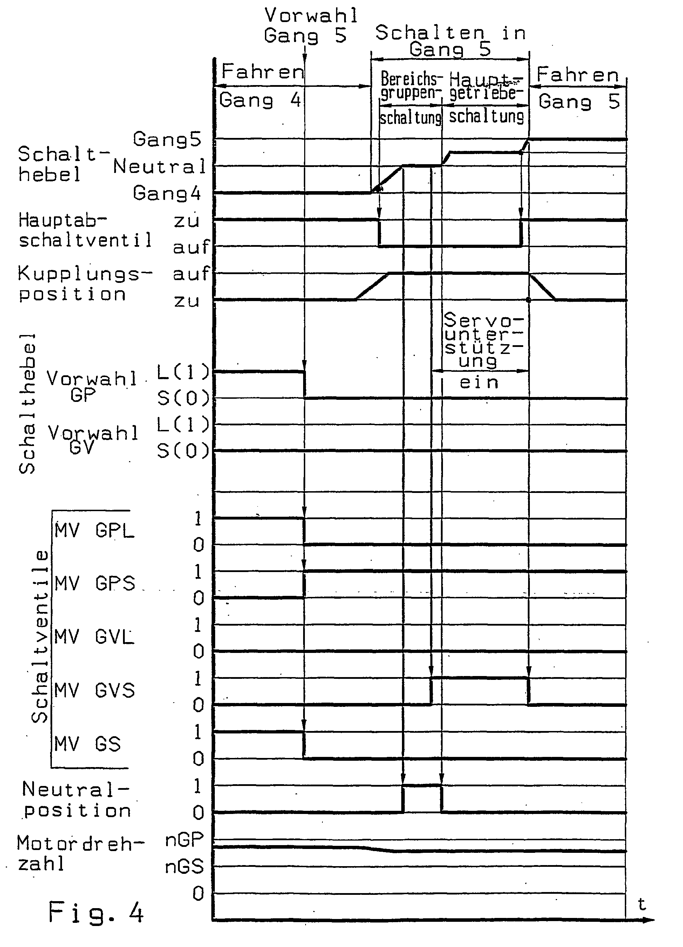

Die Fig. 4 zeigt den zeitlichen Schaltablauf im Hauptgetriebeteil 10 und im Bereichsgruppengetriebe 14 für die verschiedenen an der Schaltung beteiligten Elemente. Dargestellt wir eine Schaltung von der eingelegten vierten Gangstufe im Hauptgetriebe 10 bei eingelegter langsamer Schaltstufe im Bereichsgruppengetriebe 14 hin zur ersten Gangstufe im Hauptgetriebe 10 bei eingelegter schneller Schaltstufe im Bereichsgruppengetriebe 14. Das entspricht praktisch einer Schaltung vom vierten in den fünften Gang unter der Voraussetzung, dass keine Schaltung im Splitgruppengetriebe 12 stattfindet.
Auf der Zeitachse t wird zunächst der Zustand des Fahrens im vierten Gang als Ausgangsgang beschrieben, der dann übergeht in den Schaltvorgang vom vierten in den fünften Gang und abschließt im Zustand des Fahrens im fünften Gang. Während des Fahrens im vierten Gang findet die Vorwahl des fünften Ganges statt. Der Schaltvorgang unterteilt sich in die Schaltung im Bereichsgruppengetriebe 14 und die Schaltung im Hauptgetriebeteil 10. Leicht überschneidend setzt beim Übergang der beiden Schaltungen die Zuschaltung der Servounterstützung ein, die hier in etwa mit einer Verzögerung von beispielsweise bis zu 0.3 Sekunden nach Erkennen der Neutralposition einsetzt.

Während des Fahrens im vierten Gang befindet sich der Schalthebel 16 in der Position vom vierten Gang nach Schaltbild 28. Das bleibt auch so, wenn am Schalthebel 16 der Kippschalter 24 für die Vorauswahl der Umschaltung des Bereichsgruppengetriebes 14 in den fünften Gang betätigt wird. Der Kippschalter 22 für die Vorauswahl der Umschaltung des Splitgruppengetriebes 12 bleibt während des gesamten Schaltvorganges unverändert. Der Schalthebel 16 wird dann in Richtung auf die Neutralposition verschoben, nachdem die Kupplungsposition von "Zu" nach "Auf" verändert wurde durch Betätigen des Kupplungspedals 62. Durch die Bewegung von Schalthebel 16 wird das Hauptabschaltventil 42 betätigt und geöffnet und lässt Luft zu den Ventilen 44 ("MV GPL") und 46 ("MV GPS") gelangen. Bei der Vorauswahl der Bereichsgruppenumschaltung wird das Ventil 46 ("MV GPS") geöffnet (0=>1), während gleichzeitig das Ventil 44 ("MV GPL") geschlossen wird (1=>0) und das Ventil 52 ebenfalls geschlossen wird, wodurch der Gassensperrzylinder 56 entsperrt. Nach Erreichen der Neutralposition durch den Schalthebel 16 schaltet die Neutralpositionserkennung von 0 nach 1 und die Servounterstützung wird verzögert eingeschaltet. Nach Ablauf der Verzögerungszeit bzw. nach Erkennen der eingelegten schnellen Schaltstufen im Bereichsgruppengetriebe 14 wird von der Steuereinrichtung 20 das Ventil 38 ("MV GVS") geöffnet und lässt die Luft über das Wechselventil 80 zur Servounterstützungseinrichtung 74 gelangen, solange das Kupplungspedal 62 betätigt ist.

Während dieser Zeit vollzieht sich die Schaltung des Bereichsgruppengetriebes 14 vom langsamen in den schnellen Schaltzustand. Anschließend wird bei weiterhin geöffneter Kupplung 8 der Schalthebel 16 in Richtung auf die Schaltposition für den fünften Gang nach Schaltbild 28 verschoben und die Neutralpositionserkennung schaltet von 1 nach 0. Die Schaltposition für den fünften Gang wird erst erreicht, nachdem der Synchronisierungsvorgang im Hauptgetriebeteil 10 abgeschlossen ist. Das Hauptabschaltventil 42 wird wieder geschlossen und sperrt de Luftzufuhr zu den Ventilen 44 und 46 ab. Die Kupplung 62 wird danach wieder geschlossen und das Fahrzeug fährt im fünften Gang.

### Bezugzeichen

- 2: Fahrzeug
- 4: Antriebsmaschine
- 6: Getriebe
- 8: Kupplung
- 10: Hauptgetriebeteil
- 12: Splitgruppengetriebe
- 14: Bereichsgruppengetriebe
- 16: Schalthebel
- 18: Verbindungsleitung
- 20: Steuereinrichtung
- 22: Kippschalter
- 24: Kippschalter
- 26: Verbindungsleitung
- 28: Schaltbild
- 34: Luftvorrat
- 36: Ventil
- 38: Ventil
- 40: Schaltzylinder
- 42: Hauptabschaltventil
- 44: Ventil
- 46: Ventil
- 48: Schaltzylinder
- 50: Sensor
- 52: Ventil
- 54: Gassensperrzylinder
- 56: Umlenkhebel
- 58: Schaltwelle
- 60: Ventilblock
- 62: Kupplungspedal
- 64: Schalter
- 72: Zuleitung
- 74: Servounterstützungseinrichtung
- 76: Ausgangsleitung
- 78: Eingangsöffnung
- 80: Wechselventil
- 82: Ausgangsleitung
- 84: Eingangsöffnung
- 86: Ausgangsöffnung
- 88: Pneumatikleitung
- 94: Leitung

## Patentansprüche

1. Verfahren zur Reduzierung der Servounterstützung an einer Schalteinheit für ein Fahrzeuggetriebe (6), das ein manuell vom Fahrzeugführer an einem Schalthebel (16) geschaltetes Hauptgetriebeteil (10) und ein über Ventile (44, 46) geschaltetes Bereichsgruppengetriebe (12) umfasst, dessen Schaltungen manuell vom Fahrzeugführer an dem Schalthebel (16) vorwählbar sind, und mit einer Servounterstützungseinrichtung (74) zur Schaltung der Gangstufen im Hauptgetriebeteil (10) und mit einer elektronischen Steuereinrichtung (20), die die Ventile (44, 46) betätigt, **dadurch gekennzeichnet , dass** die Neutralposition in dem manuell geschalteten Hauptgetriebeteil (10) erkannt wird und mit Erkennen der Neutralposition die Schaltung im Bereichsgruppengetriebeteil (14) beginnt und verzögert die Servounterstützung zugeschaltet wird.

2. Verfahren nach Anspruch 1, **dadurch gekennzeichnet, dass** die Beendigung der Schaltung im Bereichsgruppengetriebe (14) erkannt wird und nach Erkennen der Beendigung die Zuschaltung der Servounterstützung erfolgt.

3. Verfahren nach Anspruch 1, **dadurch gekennzeichnet, dass** die verzögerte Zuschaltung nach Ablauf einer vorgegebenen Zeit erfolgt.

4. Verfahren nach Anspruch 3, **dadurch gekennzeichnet, dass** die Getriebeöltemperatur erfasst wird und die vorgegebene Zeit in Abhängigkeit der erfassten Getriebeöltemperatur bestimmt wird.

5. Verfahren nach Anspruch 3, **dadurch gekennzeichnet, dass** die Getriebeabtriebsdrehzahl erfasst wird und die vorgegebene Zeit in Abhängigkeit der erfassten Getriebeabtriebsdrehzahl bestimmt wird.

6. Verfahren nach Anspruch 3, **dadurch gekennzeichnet, dass** die verzögerte Zuschaltung nach Ablauf einer vorgegebenen Zeit, bis zu deren Ende der Abschluss der Schaltung im Bereichsgruppengetriebeteil (14) üblicherweise erwartet wird, erfolgt.

7. Verfahren nach Anspruch 6, **dadurch gekennzeichnet, dass** die vorgegebene Zeit nach der üblicherweise bei einer vorbestimmten Öltemperatur benötigten Schaltzeit bestimmt wird.

## Claims

1. Method for reducing the power assistance for a gear-shifting unit for a vehicle transmission (6), which comprises a main transmission component (10) which is shifted manually by the driver of the vehicle at a gear shift lever (16) and a range group transmission (12) which is shifted by means of valves (44, 46) and whose gear-shifting operations can be preselected manually by the driver of the vehicle at the gear shift lever (16), and having a power assistance device (74) for shifting the gear speeds in the main transmission component (10) and having an electronic control device (20) which activates the valves (44, 46), **characterized in that** the neutral position in the manually shifted main transmission component (10) is detected, and when the neutral position is detected the gear-shifting operation in the range group transmission component (14) starts and the power assistance is activated with a delay.

2. Method according to Claim 1, **characterized in that** the ending of the gear-shifting operation in the range group transmission (14) is detected, and the power assistance is activated after the ending has been detected.

3. Method according to Claim 1, **characterized in that** the delayed activation takes place after a predefined time has expired.

4. Method according to Claim 3, **characterized in that** the transmission oil temperature is sensed, and the predefined time is determined as a function of the sensed transmission oil temperature.

5. Method according to Claim 3, **characterized in that** the transmission output speed is sensed, and the predefined time is determined as a function of the sensed transmission output speed.

6. Method according to Claim 3, **characterized in that** the delayed activation takes place after a predefined time has expired, the termination of the gear-shifting operation in the range group transmission component (14) being usually anticipated by the end of said time.

7. Method according to Claim 6, **characterized in that** the predefined time is determined after the gear-shifting time which is usually required at a predetermined oil temperature.

## Revendications

1. Procédé de réduction de la servo-assistance à une unité de changement de rapport d'une transmission (6) de véhicule qui comprend une partie principale (10) de transmission accouplée manuellement par le conducteur du véhicule à l'aide d'un levier (16) de changement de rapport et une transmission (12) à groupes partiels accouplée par des soupapes (44, 46) et dont les rapports peuvent être présélectionnés manuellement par le conducteur du véhicule à l'aide du levier (16) de changement de rapport,
et qui présente un dispositif (74) de servo-assistance qui sert à accoupler les rapports de transmission de la partie principale (10) de la transmission et un dispositif électronique de commande (20) qui actionne les soupapes (44, 46),
**caractérisé en ce que**
la position neutre de la partie principale (10) de la transmission accouplée manuellement est détectée,
**en ce que** l'accouplement de la partie (14) de la transmission à groupes partiels commence par la détection de la position neutre et
**en ce que** la servo-assistance est accouplée avec un retard.

2. Procédé selon la revendication 1, **caractérisé en ce que** la fin de l'accouplement de la transmission (14) à groupes partiels est détectée et **en ce que** l'accouplement de la servo-assistance a lieu après détection de cette fin.

3. Procédé selon la revendication 1, **caractérisé en ce que** l'accouplement retardé s'effectue après qu'une durée prédéterminée s'est écoulée.

4. Procédé selon la revendication 3, **caractérisé en ce que** la température de l'huile de transmission est détectée et **en ce que** la durée prédéterminée est définie en fonction de la température détectée de l'huile de transmission.

5. Procédé selon la revendication 3, **caractérisé en ce que** la vitesse de rotation de sortie de la transmission est détectée et **en ce que** la durée prédéterminée est définie en fonction de la vitesse de rotation de sortie détectée de la transmission.

6. Procédé selon la revendication 3, **caractérisé en ce que** l'accouplement retardé s'effectue après qu'une durée prédéterminée s'est écoulée et **en ce qu'**avant la fin de cette durée, la fin de l'accouplement de la partie de transmission (14) à groupes partiels est attendue de la manière habituelle.

7. Procédé selon la revendication 6, **caractérisé en ce que** la durée prédéterminée est définie en fonction de la durée d'accouplement habituellement nécessaire à une température d'huile prédéterminée.
